# EUROPÄISCHE PATENTANMELDUNG

(11) **EP 3 462 586 A1**
(43) Veröffentlichungstag der Anmeldung: **03.04.2019**
(21) Anmeldenummer: 17194067.9
(22) Anmeldetag: 29.09.2017
(51) Int. Cl.: H02M 1/36, H02M 7/06, H02M 7/12, H02M 7/162, H02M 1/00, H02M 3/156, H02M 3/335

(54) **VORLADUNG EINES STROMRICHTERSPANNUNGSZWISCHENKREISES MITTELS EINER HILFSENERGIEVERSORGUNG**

(71) Anmelder: Siemens Aktiengesellschaft, 80333 München (DE)
(72) Erfinder: STADTER, Norbert, 96155 Buttenheim (DE)

(57) **Zusammenfassung**

Die Erfindung betrifft einen Stromrichter (1), aufweisend einen Gleichrichter (12), einen Zwischenkreis (21) mit mindestens einem Zwischenkreiskondensator (14) und eine Hilfsenergieversorgung (30). Zur Verbesserung der Vorladung wird vorgeschlagen dass die Hilfsenergieversorgung (30) einen Tiefsetzsteller (31) und einen Spannungserzeugungseinheit (32) umfasst, wobei am Eingang (37) des Tiefsetzstellers (31) ein Kondensator (35) angeordnet ist, wobei der Ausgang (36) des Tiefsetzstellers (31) mit der Spannungserzeugungseinheit (32) über ein Schaltelement (33) verbunden ist, wobei der Ausgang (36) des Tiefsetzstellers (31) über eine Diode (38) mit dem Zwischenkreis (21) verbunden ist, wobei ein gleichspannungsseitige Ausgang (13) des Gleichrichters (12) über ein Entkopplungselement (34) mit dem Zwischenkreis (21) verbunden ist, wobei der gleichspannungsseitige Ausgang (13) des Gleichrichters (12) mit dem Eingang des Tiefsetzstellers (31) verbunden ist, wobei die Kapazität des Kondensators (35) geringer ist als die Kapazität des Zwischenkreiskondensators (14). Ferner betrifft die Erfindung ein Verfahren zur Vorladung mindestens eines Zwischenkreiskondensators (14) eines derartigen Stromrichters (1), wobei mittels des Tiefsetzstellers (31) der Hilfsenergieversorgung (30) ein Vorladestrom (i_{VL}) von einem Netzanschluss (L1,L2,L3) zum mindestens einen Zwischenkreiskondensator (14) gesteuert oder geregelt wird.

## Beschreibung

Die Erfindung betrifft einen Stromrichter mit einem Gleichrichter, einem Zwischenkreis mit mindestens einem Zwischenkreiskondensator und einer Hilfsenergieversorgung. Ferner betrifft die Erfindung ein Verfahren zur Vorladung mindestens eines Zwischenkreiskondensators derartigen Stromrichters.

Spannungszwischenkreise von Stromrichtern oder Frequenzumrichtern können nicht direkt über die Gleichrichtung an Netzspannung geschaltet werden, da die dadurch entstehenden Ladeströme Bauteile überlasten würde. Deshalb wird der Zwischenkreis mit einem zusätzlichem Schaltungsteil bei reduziertem Strom geladen und erst bei entsprechend hoher Zwischenkreisspannung direkt mit dem Netz verbunden.

Der Vorladestrom für den Spannungszwischenkreis wird dabei üblicherweise durch Widerstände reduziert, die nach gewisser Zeit oder Spannungsniveau am Zwischenkreis durch ein Schütz oder Halbleiter überbrückt werden. Ebenso ist es möglich, den Spannungszwischenkreis gesteuert mittels eines Tiefsetzstellers vorzuladen. Bei einem Thyristorgleichrichter bietet sich darüber hinaus die Möglichkeit, den Zwischenkreis über eine Phasenanschnittssteuerung vorzuladen.

Des Weiteren ist aus der EP 2 533 409 A1 bekannt, die Vorladung mittels Kondensatoren auszuführen.

Für die Versorgung unterschiedlicher Komponenten im Stromrichter wie beispielsweise Regelungselektronik, Ansteuerbaugruppen und Lüfter ist im Stromrichter eine Hilfsenergieversorgung vorhanden. Diese Komponenten werden auch als Hilfselektronik oder allgemein als Hilfsbetriebe bezeichnet. Die Hilfselektronik von Stromrichtern wird durch die Hilfsenergieversorgung mit elektrischer Energie versorgt, welche die benötigte Energie häufig aus dem Spannungszwischenkreis oder einem weiteren Netz entnimmt.

Der Erfindung liegt die Aufgabe zugrunde, die Vorladung von Stromrichtern zu verbessern.

Diese Aufgabe wird durch einen Stromrichter mit einem Gleichrichter, einem Zwischenkreis mit mindestens einem Zwischenkreiskondensator und einer Hilfsenergieversorgung gelöst, wobei die Hilfsenergieversorgung einen Tiefsetzsteller und einen Spannungserzeugungseinheit umfasst, wobei am Eingang des Tiefsetzstellers ein Kondensator angeordnet ist, wobei der Ausgang des Tiefsetzstellers mit der Spannungserzeugungseinheit über ein Schaltelement verbunden ist, wobei der Ausgang des Tiefsetzstellers über eine Diode mit dem Zwischenkreis verbunden ist, wobei der gleichspannungsseitige Ausgang des Gleichrichters über ein Entkopplungselement mit dem Zwischenkreis verbunden ist, wobei der gleichspannungsseitige Ausgang des Gleichrichters mit dem Eingang des Tiefsetzstellers verbunden ist, wobei die Kapazität des Kondensators geringer ist als die Kapazität des Zwischenkreiskondensators. Weiter wird die Aufgabe durch ein Verfahren zur Vorladung mindestens eines Zwischenkreiskondensators eines derartigen Stromrichters gelöst, wobei mittels des Tiefsetzstellers der Hilfsenergieversorgung ein Vorladestrom von einem Netzanschluss zum mindestens einen Zwischenkreiskondensator gesteuert oder geregelt wird.

Weitere vorteilhafte Ausgestaltungen der Erfindung sind in den abhängigen Ansprüchen angegeben.

Der Erfindung liegt die Aufgabe zugrunde, dass sich die Stromversorgung des Stromrichters sowohl für die Versorgung der Hilfselektronik als auch für das Vorladen des Zwischenkreises nutzen lässt. Dazu muss die Hilfsenergieversorgung einen Tiefsetzsteller und eine Spannungserzeugungseinheit aufweisen. Diese Art von Hilfsenergieversorgung wird auch zweistufige Flusswandlertopologie genannt. Um zwischen den Betriebsmodi Vorladung des Zwischenkreises und Erzeugung Spannung für Hilfsenergie umschalten zu können, ist am Ausgang des Tiefsetzstellers ein Schaltelement vorhanden. Dies kann beispielsweise mit einem mechanischen Schalter wie einem Relais oder mit einem Halbleiter realisiert werden.

Insbesondere Stromrichter mit hoher Leistung oberhalb von 100 kW, bei denen die Stromversorgung hohe Hilfsversorgungsleistung unter anderem für die Kühlung aufbringen muss, lohnt sich eine zweistufige Flusswandlertopologie einzusetzen. Die Leistung des Tiefsetzstellers reicht dann aus, um den Zwischenkreis in angemessener Zeit zu laden.

Die Vorladung kann dabei wie folgt ablaufen. Zuerst wird der Zwischenkreis vorgeladen. Dazu wird der Tiefsetzsteller an seiner Stromgrenze arbeiten bis der Zwischenkreis eine Spannung besitzt, die auf Höhe des Netzscheitelwertes aufgeladen ist. Danach wird zustands- oder zeitgesteuert die Vorladung abgeschaltet womit der Ausgang der Drossel zur nachfolgenden Stromversorgung gebrückt wird. In dem Zuge kann der Gleichrichter mittels des Entkopplungselementes mit dem Zwischenkreis elektrisch verbunden werden.

Der Hauptvorteil liegt darin, dass ein Schaltungsteil, genauer gesagt der Tiefsetzsteller, zwei Aufgaben übernehmen kann, wofür in der Vergangenheit zwei Schaltungsteile verwendet wurden. Dadurch werden Kosten und Bauraum reduziert. Desweitern bietet die Erfindung Robustheit gegenüber einem Kurzschluss im Zwischenkreis, da dieser nicht zwangsläufig zu einem Kurzschließen der Netzphasen führt. Auch ein Verpolen von mehreren über den Zwischenkreis verbundenen Umrichtern oder zu hohe Zwischenkreiskapazität führt zu einem Verhalten, was einem Kurzschluss ähnelt (Freilaufdioden der IGBTs in Durchlassrichtung) und durch die neu vorgeschlagene Anordnung beherrscht werden kann. Bei modularen Stromrichterverbänden (wie beispielsweise dem SINAMICS S 120) lässt sich daher diese Vorladung besonders gut nutzen, da eine Wechselwirkung der Stromrichter, beispielsweise durch gleichzeitiges Vorladen und einer damit verbundenen hohen Netzbelastung zuverlässig vermieden wird. Bei der erfindungsgemäßen Anordnung kann nun der Tiefsetzsteller den Zwischenkreisladestrom ohne zusätzlichen Aufwand überwachen. Damit kann auf eine zusätzliche Stromüberwachung, wie sie bei einer Widerstands- bzw. Phasenanschnittvorladung eingesetzt wird, verzichtet werden. Weiter kann auch auf ein entsprechendes Schaltorgan zur Reaktion auf einen durch die Stromüberwachung ermittelten unzulässigen Strom verzichtet werden. Neben der Einsparung von Kosten für die Komponenten verbessert sich auch der Wirkungsgrad des Stromrichters, da auf diese verlustbehafteten verzichtet werden kann.

Bei Stromrichtern mit Netzeingangsfilter bereitet die erfindungsgemäße Anordnung gegenüber einer Thyristorladung mit Phasenanschnittsteuerung weniger Probleme, da dieses Filter kaum Anregung durch den Tiefsetzsteller erfährt. Damit kann ein unerwünschtes Schwingungsverhalten am Netzeingangsfilter zuverlässig vermieden werden. Die Phasenanschnittsteuerung neigt darüber hinaus dazu, beim Netzeingangsfilter gefährliche Überspannungen zu erzeugen.

Die vorgeschlagene Schaltung kann darüber hinaus auch die Formierung des Zwischenkreises übernehmen, die bei längerem Stillstand des Stromrichters notwendig ist. Die Schaltung kann dann spannungs- oder auch stromgesteuert den Zwischenkreis formieren. Stand der Technik ist es, dass derzeit der Betreiber des Stromrichters umständlich von Hand eine in Stufen steigende Spannung an den Zwischenkreis anlegen muss.

Der Gleichrichter kann beispielsweise durch eine B2-(1phasig) oder eine B6-Brückenschaltung (3phasig) gebildet werden. In einer einfachen Ausführung können in den Brückenzweigen Dioden angeordnet sein. Ebenso ist es möglich, als Gleichrichter eine halb- oder vollgesteuerte Brückenschaltung mit Thyristoren zu verwenden. Darüber hinaus kann alternativ auch ein Stromrichter mit abschaltbaren Halbleitern als Gleichrichter verwendet werden. Dabei bilden die Dioden, welche antiparallel zu den abschaltbaren Schaltelementen angeordnet sind den Gleichrichter. Darüber hinaus ist es möglich, auch verschiedene vorgenannte Aufbauten miteinander zu kombinieren. So kann beispielsweise eine halbgesteuerte Brücke um zusätzliche Dioden derart erweitert werden, dass die Dioden der halbgesteuerten Brücke und die zusätzlichen Dioden wiederum eine weitere Brückenschaltung bilden.

Bei einer vorteilhaften Ausgestaltung der Erfindung weist der Gleichrichter Gleichrichtdioden aufweist, die zwischen einem Netzanschluss und dem Eingang des Tiefsetzstellers angeordnet sind, wobei der Gleichrichter schaltbare Leistungshalbleiter aufweist, die zwischen dem Netzanschluss und dem Zwischenkreis angeordnet sind. Einen besonders einfachen Aufbau erzielt man, wenn Gleichrichtdioden für den Gleichrichter verwendet werden. Diese benötigen keine Hilfsenergie für eine Ansteuerung, da sie im Gegensatz zu Thyristoren kein Ansteuersignal benötigen, um in den leitfähigen Zustand überzugehen. Dabei können für die Gleichrichtung, die als Eingang für den Tiefsetzsteller dient, Dioden verwendet werden, während für die Speisung des Zwischenkreises andere Bauelement, beispielsweise andere Dioden, Thyristoren oder abschaltbare Halbleiterbauelemente, verwendet werden. Es ist besonders vorteilhaft, wenn die an der Vorladung beteiligten Halbleiter keiner Ansteuerung bedürfen. So kann die Vorladung auch dann stattfinden, wenn keine Hilfsenergie zur Ansteuerung dieser Bauelemente vorliegt.

Bei der Verwendung von abschaltbaren Halbleitern können entweder die zum Schaltelement des abschaltbaren Halbleiters antiparallelen angeordneten Dioden als Gleichrichtdioden verwendet werden oder auch zusätzlich Dioden vorgesehen werden, die mit dem Eingang des Tiefsetzstellers verbunden werden.

Bei einer weiteren vorteilhaften Ausgestaltung der Erfindung ist die Leistungsfähigkeit, insbesondere die Stromtragfähigkeit, der Gleichrichtdioden geringer als die der schaltbaren Leistungshalbleiter. Da die Vorladung mit Hilfe des Tiefsetzstellers steuerbar oder regelbar ist, können die maximalen Ströme auf einfache Weise durch die Steuerung/Regelung festgelegt werden. Die entsprechenden Gleichrichtdioden zur Vorladung benötigen dann nur eine geringe Strombelastbarkeit. Da die Vorladung im Betrieb nur selten auftritt, können diese Gleichrichtdioden auch für die Vorladung im Überlastbereich betrieben werden, in denen ein kurzfristiger Betrieb schadlos möglich ist. Damit können entsprechend preisgünstige Dioden als Gleichrichtdioden verwendet werden.

Bei einer weiteren vorteilhaften Ausgestaltung der Erfindung ist das Entkopplungselement als mechanischer Schalter, insbesondere als Trenner, ausgeführt. Bei der Verwendung eines mechanischen Schalters als Entkopplungselement kann unabhängig von der Höhe der Zwischenkreisspannung und der Netzspannung die Verbindung zwischen Gleichrichter und Zwischenkreis hergestellt werden. Dies bietet sich insbesondere dann an, wenn der Gleichrichter abschaltbaren Halbleiter aufweist, da in diesem Fall die Freilaufdioden zu zu einem nicht kontrollierbaren Ladestrom führen können. Auch wenn für die Speisung des Zwischenkreises und für die Vorladung dieselben Komponenten, wie beispielsweise eine B2 oder B6 Diodenbrücke genutzt werden, hat sich die Verwendung eines mechanischen Schalters als vorteilhaft erwiesen, da dann während der Vorladung zuverlässig ein direkter Stromfluss vom Gleichrichter in den Zwischenkreis vermieden werden kann.

Bei einer weiteren vorteilhaften Ausgestaltung der Erfindung ist das Entkopplungselement als Diode ausgeführt. Wenn ein Stromfluss des Gleichrichters in den Zwischenkreis während der Vorladung vermieden werden kann, beispielsweise durch eine halb- oder vollgesteuerte Brückenschaltung, so kann als Entkopplungselement eine Diode eingesetzt werden. Diese benötigt im Gegensatz zum mechanischen Schalter keine Logik, welche den benötigten Schaltzustand bestimmt und diesen dann an den Schalter als Schalthandlung weitergibt. Die Diode ermöglicht es zudem, dass im Betrieb des Stromrichters der Tiefsetzsteller nicht nur durch die gespeicherte Energie des Kondensators abgefedert wird, sondern auch die Energie des Zwischenkreiskondensators zur Verfügung steht. Damit lässt sich der Kondensator besonders klein dimensionieren. Er muss nur für die Belastung des Vorladens ausgelegt werden, während für den Betrieb der Spannungserzeugungseinheit die Energie des Zwischenkreiskondensators zur Verfügung steht. Die Dimensionierung des Kondensators erfolgt dann nur auf die Vorladung des Zwischenkreiskondensators. Die am Eingang benötigte Energie für den Betrieb der Spannungserzeugungseinheit wird durch die Diode sowohl vom Kondensator als auch vom Zwischenkreiskondensator bereitgestellt. Damit kann für den Kondensator eine besonders niedrige Kapazität gewählt werden, so dass beim Vorladen des Kondensators die Belastung des Energieversorgungsnetzes durch Einschaltströme besonders gering ist. Damit lässt sich eine besonders netzfreundliche und belastungsarme Stromrichterschaltung realisieren. Gleichzeitig ist dieser Aufbau besonders einfach und kostengünstig realisierbar.

Bei einer weiteren vorteilhaften Ausgestaltung der Erfindung ist das Schaltelement als mechanischer Schalter, insbesondere als Trenner, ausgeführt. Mit dem mechanischen Schalter kann auf einfache und kostengünstige Weise die Betriebsart der Hilfsenergieversorgung eingestellt werden. Während in einer ersten Schaltposition der Tiefsetzsteller nur die geregelte oder gesteuerte Vorladung des Zwischenkreises vornimmt, wird in der zweiten Schaltposition zusätzlich oder alternativ die Spannungserzeugung für die Hilfsenergie durch die Spannungserzeugungseinheit aktiviert.

Bei einer weiteren vorteilhaften Ausgestaltung der Erfindung ist das Schaltelement als Halbleiterschalter, insbesondere als MOSFet, ausgeführt. Mit dieser Ausgestaltung ist es möglich, beispielsweise mit Hilfe eines pulsweitenmodulierten Signals die Höhe der Ausgangsspannung der Spannungserzeugungseinheit zu regeln oder zu steuern. Es ist also mit dieser Ausgestaltung möglich, durch Ab- und Zuschalten des Schaltelementes den Zwischenkreis aufzuladen während die Eingangsspannung für die Stromversorgung u_{H} auf Niveau gehalten wird.

Bei einer weiteren vorteilhaften Ausgestaltung der Erfindung wird nach Abschluss der Vorladung das Schaltelement in den leitenden Zustand versetzt. Damit kann die Spannungserzeugungseinheit Energie für die Hilfsbetriebe liefern. Ab diesem Zeitpunkt kann der Stromrichter in Betrieb gehen, da notwendigen Komponenten wie beispielsweise die Ansteuerung der Halbleiter oder die Kühlung des Stromrichters betriebsbereit sind.

Bei einer weiteren vorteilhaften Ausgestaltung der Erfindung wird während der Vorladung mittels des Halbleiterschalters gemäß Anspruch 6 eine Ausgangsspannung der Spannungserzeugungseinheit geregelt. In diesem Fall kann bereits während der Vorladung des Zwischenkreiskondensators durch die Spannungserzeugungseinheit Energie für Hilfsbetriebe bereitgestellt werden. Darüber hinaus ist die zur Verfügung gestellte Energie in ihrer Spannungshöhe durch den Halbleiterschalter steuer bzw. regelbar.

Im Folgenden wird die Erfindung anhand der in den Figuren dargestellten Ausführungsbeispiele näher beschrieben und erläutert. Es zeigen:
- FIG 1: eine Vorladeschaltung aus dem Stand der Technik und
- FIG 2 bis FIG 5: Stromrichterschaltungen mit Vorladung mittels Hilfsenergieversorgung.

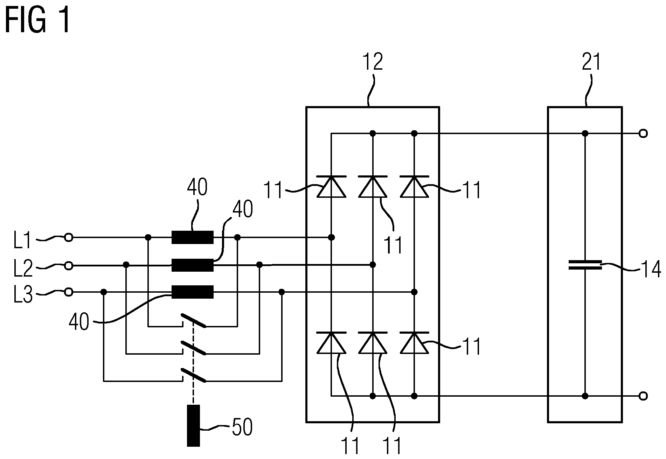

Die FIG 1 zeigt eine Stromrichterschaltung mit einer aus dem Stand der Technik bekannten Vorladung. Der Stromrichter weist einen Gleichrichter 12 und einen Zwischenkreis 21 auf. Im Zwischenkreis 21 ist ein Zwischenkreiskondensator 14 angeordnet. In einer einfachen Ausführung besteht der Gleichrichter 12 aus einer B6-Brückenschaltung mit Gleichrichtdioden 11.

Vom Netzanschluss L1, L2, L3 wird der Zwischenkreiskondensator 14 über die Gleichrichterdioden 11 vorgeladen. Um den Vorladestrom auf zulässige Stromwerte zu begrenzen, sind in der Zuleitung zwischen Netzanschluss L1, L2, L3 und Gleichrichter 12 Vorladewiderstände 40 angeordnet. Durch diese wird der Vorladestrom begrenzt und unzulässig hohe Stromwerte, die das Energieversorgungsnetz belasten können, vermieden. Nach Abschluss der Vorladung werden die Vorladewiderstände 40 mittels eines Vorladeschützes 50 überbrückt, so dass im Betrieb keine oder zumindest nur geringe Verluste entstehen.

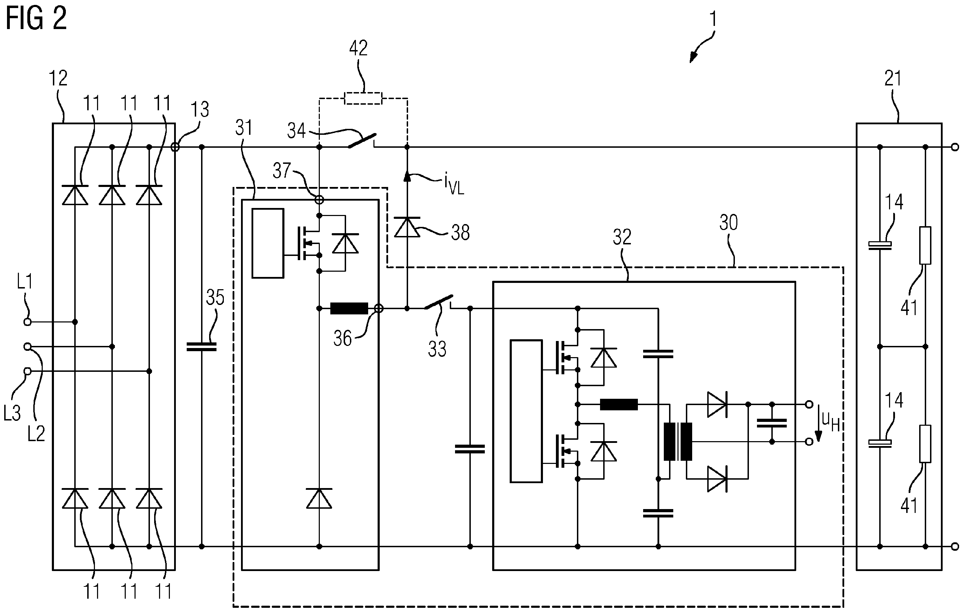

Die FIG 2 zeigt einen Stromrichter 1 mit einer Vorladung über eine Hilfsenergieversorgung 30. Bei diesem Stromrichter 1 kann auf die Verwendung von Vorladewiderstände 40 verzichtet werden. Auch dieser Stromrichter 1 weist einen Gleichrichter 12 und einen Zwischenkreis 21 auf. Bei dem Gleichrichter kann es sich um einen Diodengleichrichter, einer halbgesteuerten oder einer vollgesteuerten Diodenbrücke handeln. Ebenso kann alternativ der Gleichrichter 12 als selbstgeführter Stromrichter ausgebildet sein. Auch hier umfasst der Zwischenkreis 21 einen Zwischenkreiskondensator 14. Dabei kann der Zwischenkreis 21, wie hier dargestellt, auch eine Reihgenschaltung von mehreren, insbesondere zwei Zwischenkreiskondensatoren 14, umfassen. Um eine gleichmäßige Aufteilung der Spannung auf die beiden Zwischenkreiskondensatoren zu erreichen, werden parallel zu den Zwischenkreiskondensatoren 14 Symmetrierwiderstände 41 angeordnet. Der Gleichrichter 12 weist auch in diesem Ausführungsbeispiel eine B6-Gleichrichtschaltung, als auch Brückenschaltung bekannt, auf. Diese kann in einer einfachen Ausführung Gleichrichtdioden 11 aufweisen. Alternativ kann an Stelle einzelner Gleichrichtdioden 11 auch Thyristoren vorgesehen werden. Eine andere Alternative besteht darin, einen selbstgeführten Stromrichter mit abschaltbaren Halbleitern als Gleichrichter 12 zu verwenden. Als weitere Komponente weist der Stromrichter 1 eine Hilfsenergieversorgung 30 auf. Die Hilfsenergieversorgung 30 umfasst einen Tiefsetzsteller 31 und eine Spannungserzeugungseinheit 32. Der Eingang des Tiefsetzstellers 37 ist mit dem gleichspannungsseitigen Ausgang 13 des Gleichrichters 12 verbunden. Um eine erforderliche Spannungsstabilität am Eingang 37 des Tiefsetzstellers zu erreichen, ist dort ein Kondensator 35 angeordnet. Der Ausgang 36 des Tiefsetzstellers ist über ein Schaltelement 33 mit der Spannungserzeugungseinheit 32 verbunden. Das Schaltelement 33 ist in diesem Ausführungsbeispiel als mechanischer Schalter ausgeführt. Des Weiteren ist der Ausgang 13 des Gleichrichters 12 über ein Entkopplungselement 34 mit dem Zwischenkreis 21 verbunden. Am Ausgang der Spannungserzeugereinheit 32 liegt die Ausgangsspannung u_{H} der Spannungserzeugungseinheit 32 an. Über eine Diode 38, durch die der Vorladestrom i_{VL} fließt, ist der Ausgang 36 des Tiefsetzstellers 31 mit dem Zwischenkreis 21 verbunden.

Während der Vorladung sind das Schaltelement 33 und das Entkopplungselement 34 geöffnet. Sobald der Netzanschluss L1, L2, L3 mit einem Energieversorgungsnetz verbunden wird, wird über den Gleichrichter 12 der Kondensator 35 aufgeladen. Aufgrund der vergleichsweise geringen Kapazität des Kondensators 35 ist die Belastung des Energieversorgungsnetzes durch den Ladestrom des Kondensators 35 so gering, dass keine Vorladewiderstände zur Begrenzung des Vorladestroms erforderlich sind. Mit Hilfe des Tiefsetzstellers 31 kann ein gesteuerter oder geregelter Vorladestrom i_{VL} erzeugt werden, der die Zwischenkreiskondensatoren 14 aus dem Energieversorgungsnetz über den Netzanschluss L1, L2, L3 auflädt. Da dieser Vorladestrom i_{VL} durch den Tiefsetzsteller 31 gesteuert oder geregelt wird, können damit auf einfache Weise unzulässig hohe Stromspitzen vermieden werden. Nach Abschluss der Vorladung wird das Schaltelement 33 und das Entkopplungselement 34 geschlossen, so dass diese eine leitende Verbindung herstellen. Dadurch wird die Diode 38 in den sperrenden Zustand versetzt. Der Stromrichter 1 ist dann betriebsbereit. Die Hilfsenergieversorgung 30 kann nun an ihrem Ausgang die Ausgangsspannung u_{H} für die Versorgung der Hilfsbetriebe erzeugen und damit die Hilfsbetriebe mit elektrischer Energie versorgen.

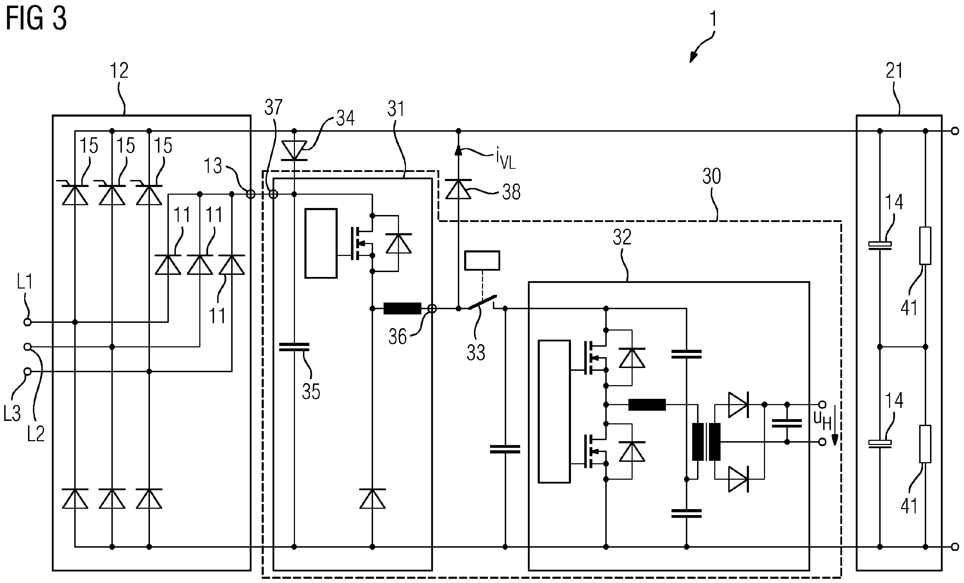

Die FIG 3 zeigt ein weiteres Ausführungsbeispiel für einen Stromrichter 1 mit einer Vorladung über die Hilfsenergieversorgung 30. Zur Vermeidung von Wiederholungen wird auf die Beschreibung zur FIG 2 sowie auf die dort eingeführten Bezugszeichen verwiesen. Der Gleichrichter 12 weist in diesem Ausführungsbeispiel eine Diodenbrücke zur Versorgung des Tiefsetzstellers 31 auf. Diese Diodenbrücke umfasst die Gleichrichtdioden 11. Des Weiteren umfasst der Gleichrichter 12 schaltbare Leistungshalbleiter 15 in Form von Thyristoren, mit denen nach abgeschlossener Vorladung Energie vom Netzanschluss L1, L2, L3 in den Zwischenkreis 21 übertragen werden kann. Alternativ ist es auch möglich, einen selbstgeführten Stromrichter als Gleichrichter 12 zu verwenden. Die Freilaufdioden der abschaltbaren Halbleiterschalter bilden dann die Gleichrichtdioden 11 des Gleichrichters 12. Als Entkopplungselemente 34 kommt eine Diode zum Einsatz. Auch in diesem Ausführungsbeispiel werden die Zwischenkreiskondensatoren 14 mit Hilfe des Tiefsetzstellers 31 gesteuert bzw. geregelt aufgeladen. Bis zum Abschluss der Vorladung ist die Diode des Entkopplungselementes 34 im sperrenden Zustand. Erst wenn die Zwischenkreiskondensatoren 14 aufgeladen sind, wird die Diode 34 des Entkopplungselements 34 leitend und die gesamte Zwischenkreiskapazität steht für den Betrieb der Hilfsenergieversorgung 30 zur Verfügung. Mit dieser Hilfsenergieversorgung 30 kann über die Ausgangsspannung u_{H} die Versorgung der Hilfsbetriebe mit elektrischer Energie erfolgen.

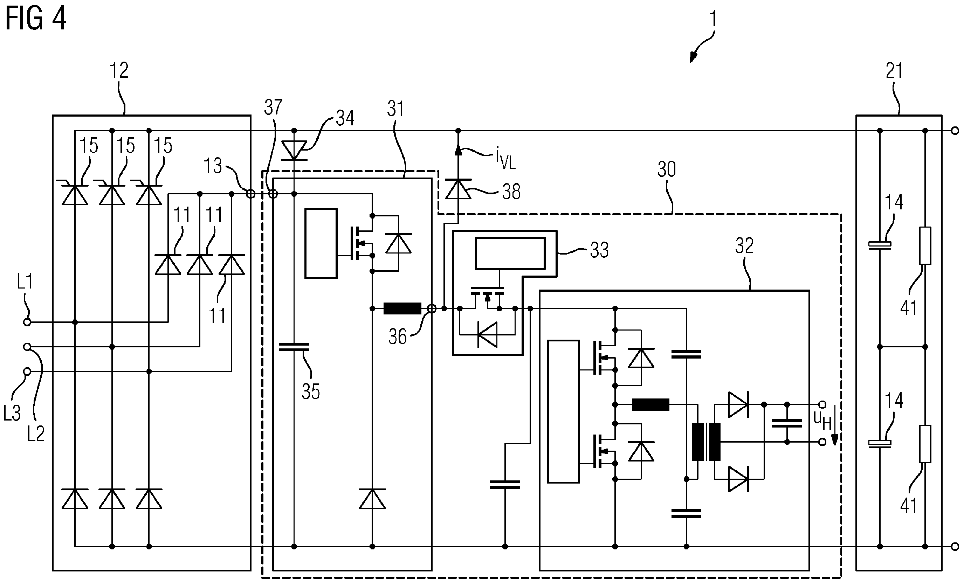

Die FIG 4 zeigt ein weiteres Ausführungsbeispiel für einen Stromrichter 1 mit einer Vorladung über die Hilfsenergieversorgung 30. Zur Vermeidung von Wiederholungen wird auf die Beschreibung zu den Figuren 2 und 3 sowie auf die dort eingeführten Bezugszeichen verwiesen. Als Schaltelement 33 wird anstelle eines mechanischen Schalters ein Halbleiterschalter verwendet. Ein möglicher Halbleiterschalter für diese Anwendung stellt ein MOSFet dar. Mit diesem Halbleiterschalter ist es möglich, bereits während der Vorladung des Zwischenkreiskondensators 14 am Ausgang der Spannungserzeugungseinheit 32 eine gesteuerte oder geregelte Ausgangsspannung u_{H} zu erzeugen. Dabei dient der Halbleiterschalter des Schaltelements 33 als Stellglied, um die Ausgangsspannung u_{H} zu beeinflussen. Somit können bereits während der Vorladung die Hilfsbetriebe des Stromrichters 1 mit elektrischer Energie versorgt werden.

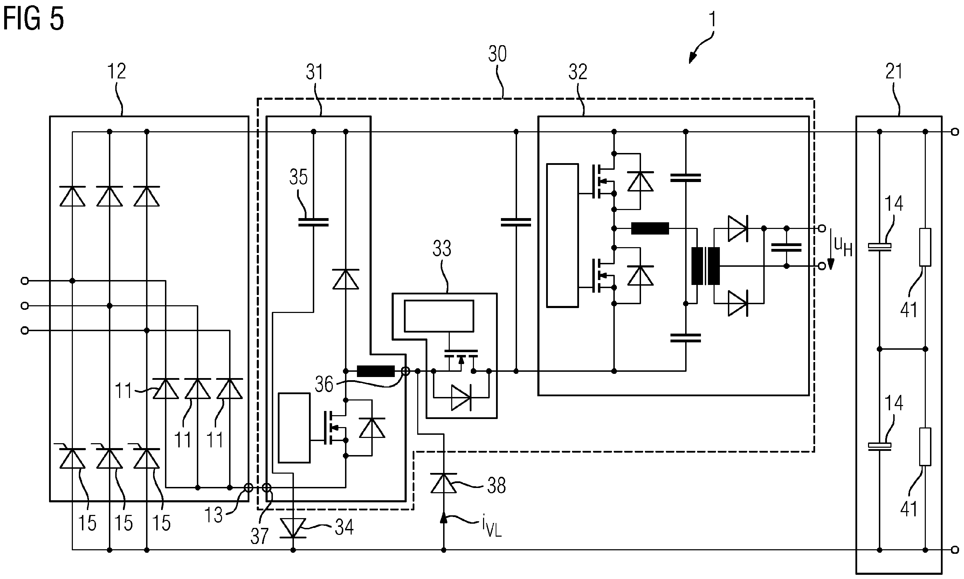

Die FIG 5 zeigt ein weiteres Ausführungsbeispiel eines Stromrichters 1 mit einer Vorladung über die Hilfsenergieversorgung 30. Zur Vermeidung von Wiederholungen wird auf die Beschreibung zu den Figuren 2 bis 4 sowie auf die dort eingeführten Bezugszeichen verwiesen. Bei dem hier dargestellten Ausführungsbeispiel ist die Hilfsenergieversorgung 30 bezüglich der Potentiale des Zwischenkreises 21 spiegelbildlich aufgebaut. Auch mit dieser Anordnung lassen sich die gleichen Vorteile wie bei den zuvor beschriebenen Ausführungsbeispielen erzeugen. Dabei beschreibt das in der FIG 5 dargestellte Ausführungsbeispiel eine Ausführung, die zum Ausführungsbeispiel der FIG 4 spiegelbildlich angeordnet ist. Ebenso ist es möglich, analog die Ausführungsbeispiele der FIG 2 oder FIG 3 spiegelbildlich bezüglich der Zwischenkreispotentiale auszuführen.

Zusammenfassend betrifft die Erfindung einen Stromrichter, aufweisend einen Gleichrichter, einen Zwischenkreis mit mindestens einem Zwischenkreiskondensator und eine Hilfsenergieversorgung. Zur Verbesserung der Vorladung wird vorgeschlagen dass die Hilfsenergieversorgung einen Tiefsetzsteller und einen Spannungserzeugungseinheit umfasst, wobei am Eingang des Tiefsetzstellers ein Kondensator angeordnet ist, wobei der Ausgang des Tiefsetzstellers mit der Spannungserzeugungseinheit über ein Schaltelement verbunden ist, wobei der Ausgang des Tiefsetzstellers über eine Diode mit dem Zwischenkreis verbunden ist, wobei ein gleichspannungsseitige Ausgang des Gleichrichters über ein Entkopplungselement mit dem Zwischenkreis verbunden ist, wobei der gleichspannungsseitige Ausgang des Gleichrichters mit dem Eingang des Tiefsetzstellers verbunden ist, wobei die Kapazität des Kondensators geringer ist als die Kapazität des Zwischenkreiskondensators. Ferner betrifft die Erfindung ein Verfahren zur Vorladung mindestens eines Zwischenkreiskondensators eines derartigen Stromrichters, wobei mittels des Tiefsetzstellers der Hilfsenergieversorgung ein Vorladestrom von einem Netzanschluss zum mindestens einen Zwischenkreiskondensator gesteuert oder geregelt wird.

## Patentansprüche

1. Stromrichter (1), aufweisend
- einen Gleichrichter (12),
- einen Zwischenkreis (21) mit mindestens einem Zwischenkreiskondensator (14) und
- eine Hilfsenergieversorgung (30),
wobei die Hilfsenergieversorgung (30) einen Tiefsetzsteller (31) und einen Spannungserzeugungseinheit (32) umfasst, wobei am Eingang (37) des Tiefsetzstellers (31) ein Kondensator (35) angeordnet ist, wobei der Ausgang (36) des Tiefsetzstellers (31) mit der Spannungserzeugungseinheit (32) über ein Schaltelement (33) verbunden ist, wobei der Ausgang (36) des Tiefsetzstellers (31) über eine Diode (38) mit dem Zwischenkreis (21) verbunden ist,
wobei ein gleichspannungsseitige Ausgang (13) des Gleichrichters (12) über ein Entkopplungselement (34) mit dem Zwischenkreis (21) verbunden ist, wobei der gleichspannungsseitige Ausgang (13) des Gleichrichters (12) mit dem Eingang des Tiefsetzstellers (31) verbunden ist, wobei die Kapazität des Kondensators (35) geringer ist als die Kapazität des Zwischenkreiskondensators (14).

2. Stromrichter (1) nach Anspruch 1, wobei der Gleichrichter (12) Gleichrichtdioden (11) aufweist, die zwischen einem Netzanschluss (L1,L2,L3) und dem Eingang (37) des Tiefsetzstellers (31) angeordnet sind, wobei der Gleichrichter (12) schaltbare Leistungshalbleiter (15) aufweist, die zwischen dem Netzanschluss (L1,L2,L3) und dem Zwischenkreis (21) angeordnet sind.

3. Stromrichter (1) nach Anspruch 2, wobei die Leistungsfähigkeit, insbesondere die Stromtragfähigkeit, der Gleichrichtdioden (11) geringer ist als die der schaltbaren Leistungshalbleiter (15).

4. Stromrichter (1) nach einem der Ansprüche 1 bis 3, wobei das Entkopplungselement (34) als mechanischer Schalter, insbesondere als Trenner, ausgeführt ist.

5. Stromrichter (1) nach einem der Ansprüche 1 bis 3, wobei das Entkopplungselement (34) als Diode ausgeführt ist.

6. Stromrichter (1) nach einem der Ansprüche 1 bis 5, wobei das Schaltelement (33) als mechanischer Schalter, insbesondere als Trenner, ausgeführt ist.

7. Stromrichter (1) nach einem der Ansprüche 1 bis 5, wobei das Schaltelement (33) als Halbleiterschalter, insbesondere als MOSFet, ausgeführt ist.

8. Verfahren zur Vorladung mindestens eines Zwischenkreiskondensators (14) eines Stromrichters (1) nach einem der Ansprüche 1 bis 7, wobei mittels des Tiefsetzstellers (31) der Hilfsenergieversorgung (30) ein Vorladestrom (i_{VL}) von einem Netzanschluss (L1,L2,L3) zum mindestens einen Zwischenkreiskondensator (14) gesteuert oder geregelt wird.

9. Verfahren nach Anspruch 8, wobei nach Abschluss der Vorladung das Schaltelement (33) in den leitenden Zustand versetzt wird.

10. Verfahren nach einem der Ansprüche 8 oder 9, wobei während der Vorladung mittels des Halbleiterschalters gemäß Anspruch 6 eine Ausgangsspannung (u_{H}) der Spannungserzeugungseinheit (32) geregelt wird.
